# FASCICULE DE BREVET EUROPEEN

(11) **EP 2 009 392 B1**
(45) Date de publication et mention de la délivrance du brevet: **10.08.2016**
(21) Numéro de dépôt: 07110926.8
(22) Date de dépôt: 25.06.2007
(51) Int. Cl.: G01C 17/34, G04B 47/06, G04B 19/26

(54) **Montre d'orientation**
Uhr mit Orientierungsfunktion
Orientation watch

(43) Date de publication de la demande: 31.12.2008
(73) Titulaire: Louis Vuitton Malletier, 75001 Paris (FR)
(72) Inventeur: Le Doussal, Gildas, 2613, Villeret (CH)
(74) Mandataire: P&TS SA (AG, Ltd.)

(56) Documents cités:
- EP-A- 0 452 757
- EP-A1- 1 343 056
- CH-A- 216 462
- FR-A- 2 849 917
- US-A- 2 032 462

## Description

### Domaine technique

La présente invention concerne une montre-boussole capable d'indiquer la position du nord à partir de la position du soleil.

### Etat de la technique

On sait que la direction du nord peut être déterminée à partir de la position du soleil et en connaissant l'heure actuelle. La terre tourne sur elle-méme en 24 heures; le soleil parcourt donc dans le ciel une trajectoire de 180° entre 06h00 et 18h00. Dans l'hémisphère Nord, le soleil est au sud à midi (heure solaire) et se déplace à vitesse angulaire constante. Il est donc possible de déterminer la position du nord géographique avec une précision remarquable simplement en observant la position du soleil.

Une montre à aiguille conventionnelle constitue un outil très pratique pour déterminer la direction des points cardinaux. On connaît la position du soleil à midi, qui est au sud. L'aiguille des heures effectue deux tours (720°) en 24 heures et se déplace donc deux fois plus vite que le soleil. Il suffit par conséquent d'orienter l'aiguille des heures vers le soleil pour obtenir la direction du sud qui correspond à la bissectrice entre l'aiguille des heures et la position du midi sur le cadran. La position du nord que l'on recherche est bien évidemment à l'opposé de cette bissectrice. Cette astuce est utilisée par des nombreux navigateurs, explorateurs, boyscouts, etc.

Le temps civil employé usuellement et affiché par les montres diffère cependant du temps solaire. En Europe de l'Ouest, le décalage est d'environ une heure en hiver et même de deux heures en été. Le décalage exact dépend du fuseau horaire employé dans chaque région, ainsi que de la position à l'intérieur de chaque méridien. En effet, l'heure solaire coïncide avec l'heure civile uniquement pour les personnes se situant exactement sur l'un des méridiens.

La direction du nord déterminée avec le procédé ci-dessus doit donc être corrigée pour compenser ce décalage. Une solution serait de remplacer à chaque mesure l'heure civile affichée par la montre par l'heure solaire (pour autant qu'on la connaisse). Une telle manipulation est cependant d'autant moins pratique que l'utilisateur doit encore remettre la montre à l'heure civile après chaque relevé.

EP452757 décrit une montre boussole comportant un élément indicateur de temps supplémentaire pour indiquer l'heure solaire en plus de l'heure civile. On peut ainsi aligner l'indicateur supplémentaire avec le soleil pour déterminer la position exacte du nord, sans devoir modifier l'heure civile. Cette montre permet en outre de prendre en compte l'équation du temps.

US4899451 décrit un mouvement pour pièce d'horlogerie comportant deux mobiles concentriques avec des indicateurs d'heure. Un des mobiles effectue une rotation de 360° en 24 heures. Il tourne donc à la même vitesse angulaire que le soleil et permet de déterminer la direction des points cardinaux en alignant le midi de la montre avec le soleil. Ce mouvement permet donc d'éviter les inconvénients liés à la détermination d'une bissectrice. Par ailleurs, la position des deux mobiles peut être déphasée en continu afin de corriger le déphasage entre l'heure civile et l'heure solaire.

Une solution similaire est décrite dans EP947894 ou dans DE3631513.

Les différentes solutions ci-dessus permettent toutes de faciliter la détermination du nord à l'aide d'une montre-bracelet. Elles fonctionnent cependant uniquement dans l'hémisphère Nord ; au sud de l'équateur, le soleil parcourt l'horizon en sens inverse et les mécanismes mis en oeuvre dans l'art antérieur ne sont d'aucune utilité.

Dans CH216462, le Nord est indiqué par une graduation sur un cadran. Un index peut être déplacé sur une échelle afin de faciliter l'orientation de la montre. Afin de s'orienter dans l'hémisphère Sud, l'échelle comporte des graduations symétriques à celles utilisées pour l'hémisphère Nord.

Dans US2032462, la direction du Nord est donnée par des caractères numériques auxiliaires sur le cadran. Un cadran est aussi prévu pour l'hémisphère Sud. La montre ne comporte pas d'aiguille ou d'autre indicateur mobile pour faciliter la lecture dans l'hémisphère Sud.

FR2849917 décrit une montre boussole avec une aiguille effectuant une rotation en 24 heures. La position du Nord est indiquée par un taximètre permettant d'effectuer une correction. Une version de taximètre existe pour l'hémisphère Sud.

EP1343056 décrit une montre boussole avec un mécanisme d'engrenage pour réduire la vitesse d'un disque portant un index indiquant le Nord. Le disque effectue un tour en 24 heures. Cette montre indique donc la direction d'un des points cardinaux lorsqu'elle se trouve dans l'hémisphère Nord seulement.

La présente invention concerne un mouvement horloger de montre selon la revendication 1 et une montre selon la revendication 15.

La montre faisant l'objet de la présente invention est destinée aux utilisateurs qui habitent ou qui se rendent dans l'hémisphère Sud. Elle comporte donc un indicateur pour indiquer la direction du nord, et/ou de n'importe quel point cardinal, lorsque la montre se trouve dans l'hémisphère Sud ou dans l'hémisphère Nord.

Afin de tenir compte de la marche du soleil dans l'hémisphère Sud, l'indicateur de l'invention effectue trois rotations de 360° en 24 heures. Il permet ainsi d'indiquer la direction du nord lorsqu'un indicateur d'heure civile ou solaire est pointé vers le soleil.

### Brève description des figures

Des exemples de mise en oeuvre de l'invention sont indiqués dans la description illustrée par les figures annexées dans lesquelles :
La figure 1 est une vue de dessus d'une montre selon l'invention ;
La figure 2 est une vue de dessus d'un mouvement selon l'invention.
La figure 3 est une vue de dessus du rouage employé dans le mouvement de la présente invention.
La figure 4 explique schématiquement le principe de détermination de la direction du nord dans l'hémisphère Nord.
La figure 5 explique schématiquement le principe de détermination de la direction du nord dans l'hémisphère Sud.
La figure 6 illustre la vitesse de déplacement des indicateurs d'heure solaire et de l'indicateur de direction dans l'hémisphère Nord.
La figure 7 illustre la vitesse de déplacement des indicateurs d'heure solaire et de l'indicateur de direction dans l'hémisphère Sud.

### Exemple(s) de mode de réalisation de l'invention

Dans la suite de la description et des revendications, on emploiera le terme « vitesse » pour désigner la vitesse angulaire, sauf lorsque le contexte impose une autre interprétation.

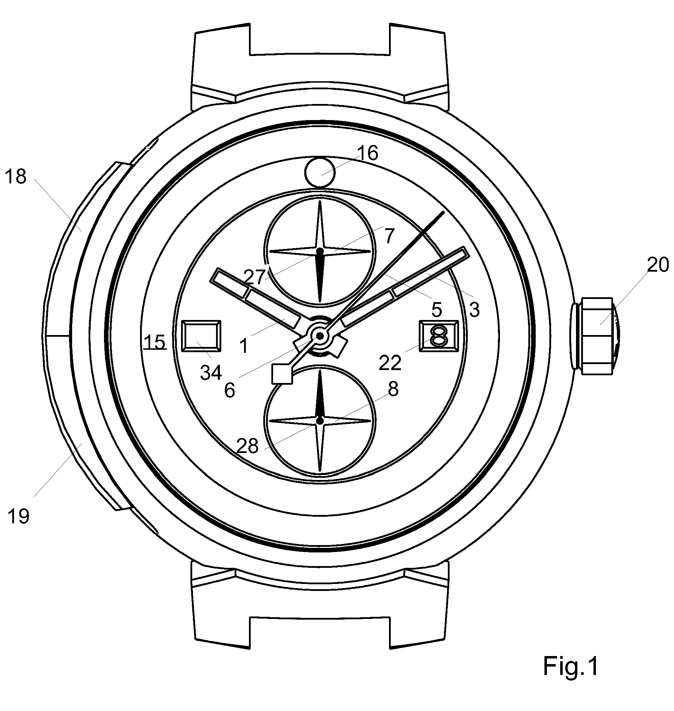

La montre illustrée à titre d'exemple sur la figure 1 comporte une aiguille des heures 1 pour indiquer l'heure civile, une aiguille des minutes 3 et une aiguille des secondes 5. Les trois aiguilles 1, 3, 5 sont montées sur un canon 6 au centre du cadran. Le quantième de la date 22 est affiché dans un guichet à travers le cadran. Un second guichet 34 à neuf heures dans cet exemple permet d'afficher une indication de type jour- nuit ; dans l'exemple de la figure, il est 10 heures 10 du matin et le guichet montre donc une portion blanche d'un disque. La nuit, le guichet affiche une image noire. D'autres symboles peuvent être employés, ainsi que affichages AM-PM et/ou des indicateurs jour-nuit à aiguilles par exemple.

Un indicateur supplémentaire 16 permet d'indiquer l'heure solaire. Dans cet exemple, l'indicateur supplémentaire est constitué par une marque, par exemple un dessin de soleil, sur un disque ou anneau externe 15 qui tourne à la périphérie du mouvement. L'indicateur d'heure solaire 16 tourne à la même vitesse que l'aiguille des heures, mais peut être décalé par pas correspondant à des heures entières à l'aide des boutons-poussoirs 18 et 19. Dans cet exemple, le bouton 18 permet d'incrémenter la position de l'indicateur 16 d'une heure à chaque pression, tandis que le bouton 19 permet de décrémenter par pas d'une heure. Il est cependant aussi envisageable d'introduire des déphasages continus ou par incréments plus fins, par exemple à l'aide de la couronne 20, pour tenir compte de la longitude de l'utilisateur. Des mécanismes plus complexes peuvent en outre être prévus pour modifier automatiquement le déphasage entre l'aiguille des heures 1 et l'indicateur supplémentaire 16 afin de tenir compte de l'équation du temps. Par ailleurs, il est aussi possible dans une variante d'employer une aiguille comme indicateur d'heure solaire, à la place d'une marque sur un disque ou un anneau. L'indicateur d'heure solaire n'est pas essentiel à l'invention, puisque, comme indiqué plus haut, il suffit d'orienter l'aiguille des heures vers le soleil pour obtenir la direction du sud, correspondant à la bissectrice de l'angle formé par l'aiguille des heures et la position du midi du cadran. Mais l'utilisation de l'indicateur d'heure solaire permet d'éviter des erreurs systématiques d'orientation qui atteindraient environ 15°, voire 30° en été, en Suisse ou en France par exemple, si l'aiguille des heures 1 était employée à la place de l'indicateur d'heure solaire.

La montre comporte par ailleurs deux indicateurs 7 et 8 pour indiquer la position d'un point cardinal dans chacun des hémisphères. Dans l'exemple illustré, l'indicateur 7 permet d'indiquer le nord lorsque l'utilisateur se trouve dans l'hémisphère Nord ; inversement, l'indicateur 8 permet de retrouver le nord lorsque l'utilisateur se trouve dans l'hémisphère Sud. Dans l'exemple avantageux illustré, les deux indicateurs sont en fait constitués d'étoiles à quatre branches montés comme des aiguilles sur des axes 27, respectivement 28; ils permettent donc d'indiquer simultanément les quatre points cardinaux. Une des branches de chaque étoile est colorée ou marquée afin de distinguer le Nord des autres points cardinaux

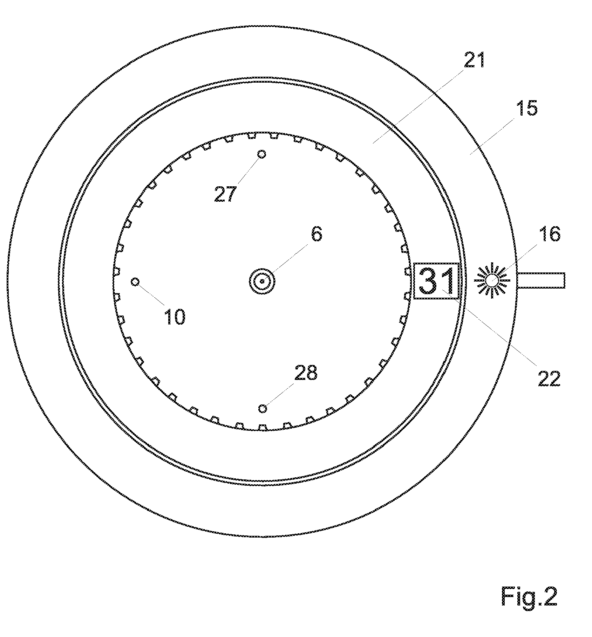

La figure 2 est une vue de dessus du mouvement illustré sur la figure 1. Par rapport à la figure 1, on voit que l'indication de quantième 22 est portée par un anneau 21 monté de manière concentrique à l'intérieur de l'anneau 15 portant l'indicateur d'heure solaire 16. D'autres moyens d'affichage de la date, y compris des affichages à grande date, peuvent être employés. Le mouvement comporte en outre un indicateur 10 à 9 heures pour afficher une indication de type jour/nuit ou matin / après-midi (AM/PM).

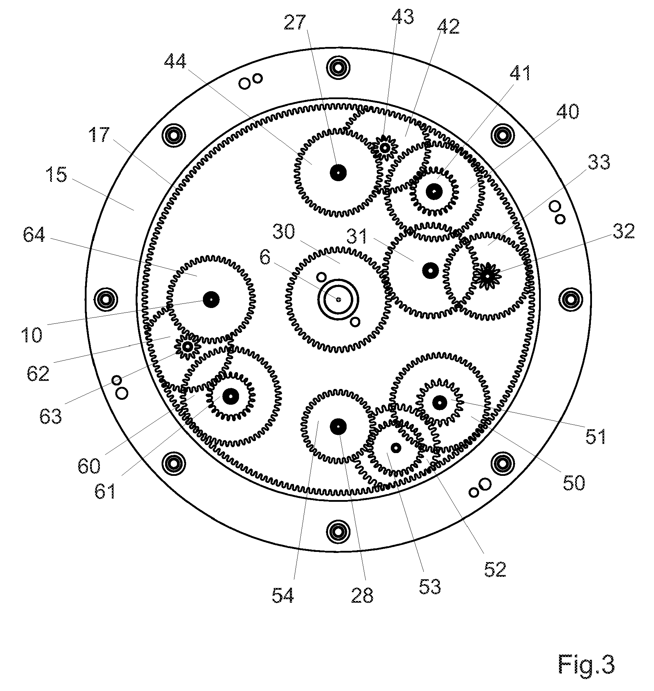

L'ensemble des indicateurs 1, 7, 8, 16 et 10 sont entraînés par la roue des heures 30 au centre du mouvement, comme on le voit en particulier sur la figure 3. Plus précisément, l'aiguille des heures 1 est montée directement sur un canon 6 sur la roue des heures. L'anneau d'heure solaire 15 est entraîné par la roue des heures 30 au travers d'une chaîne cinématique comportant les roues ou pignons 31, 32, 33 engrenant avec la denture 17 à l'intérieur de l'anneau 15. Les rapports d'engrenage de la chaîne cinématique 31-33 sont calculés de manière à assurer une rotation de l'indicateur d'heure solaire 16 à la même vitesse que celle de l'aiguille des heures, c'est-à-dire un tour en douze heures. Dans une variante préférentielle, la liaison cinématique entre la roue des heures 30 et l'anneau d'heure solaire 15 peut en outre être débrayée par exemple à l'aide des boutons-poussoirs 18, 19 afin de modifier le déphasage entre l'heure civile et l'heure solaire par pas d'une heure. Des moyens de réglage plus fins peuvent aussi être prévus.

La denture interne 17 de l'anneau d'heure solaire 15 entraîne à son tour en rotation l'axe 27 de l'indicateur 7 au travers d'une deuxième chaîne cinématique 40 à 44. L'indicateur 7 tourne dans le sens des aiguilles de la montre deux fois moins vite que l'aiguille des heures et effectue donc une rotation en 24 heures.

L'axe 28 de l'indicateur 8 est entraîné par l'anneau d'heure solaire 15 via une troisième chaîne cinématique comprenant les éléments 50 à 54; les rapports d'engrenage permettent de faire tourner l'indicateur 8 1,5 fois plus vite que l'aiguille des heures ; il effectue donc trois tours en 24 heures. L'indicateur 8 tourne également dans le sens des aiguilles de la montre.

Enfin, le mouvement comporte une quatrième chaîne cinématique 60 à 64 afin de faire tourner un indicateur jour/nuit monté sur l'axe 10, qui effectue un tour en 24 heures.

Tous les indicateurs sont donc entraînés par la roue des heures 30 ; le réglage de la montre à l'aide de la couronne pour régler l'heure civile indiquée par l'aiguille 1 agit donc aussi sur la position des indicateurs 7, 8, 10 et 16. De même, la correction du déphasage entre l'aiguille des heures 1 et l'anneau d'heure solaire 15 agit aussi sur la position des indicateurs 7, 8 et 10.

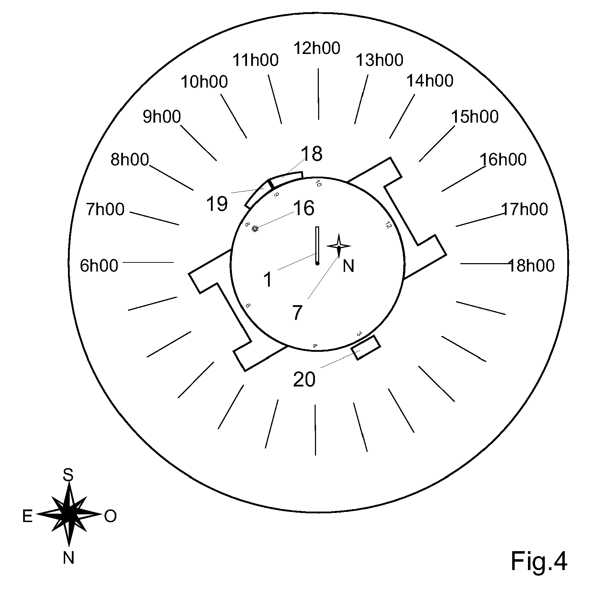

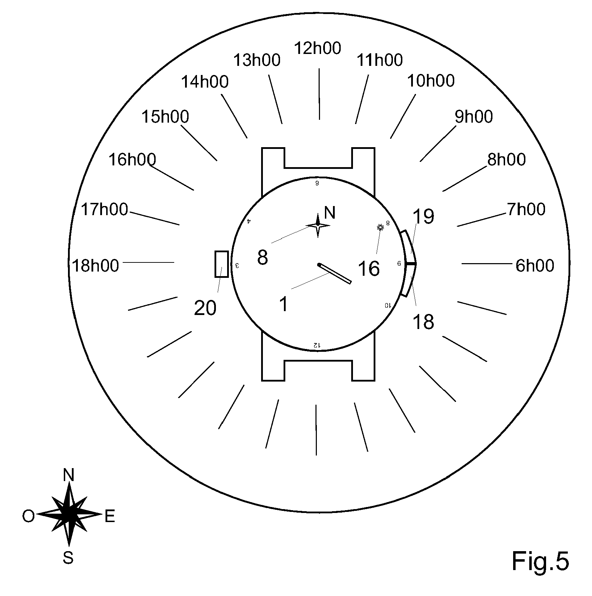

Nous allons maintenant expliquer à l'aide des figures 4 et 5 le procédé de détermination des points cardinaux dans les deux hémisphères. Dans tous les cas, il est nécessaire de commencer par corriger le déphasage entre l'heure civile affichée par l'aiguille 1 et l'heure solaire affichée par l'indicateur 16 sur l'anneau d'heure solaire 15. En agissant sur les poussoirs 18 ou 19, on déplace d'heure en heure l'indicateur 16 autour de la périphérie de la montre, de manière à introduire le déphasage correspondant à l'endroit et à la saison. Dans l'exemple illustré sur la figure 4, correspondant par exemple à un pays d'Europe centrale en été, l'heure civile est en avance d'environ deux heures sur l'heure solaire ; le soleil est donc à sa culmination à 14 heures. Comme l'aiguille des heures 1 pointe à 10 heures, l'indicateur d'heure solaire 16 est donc à 8 heures.

Afin de déterminer le nord, l'utilisateur doit tourner la montre pour orienter l'indicateur d'heure solaire 16 en direction du soleil. Dans cette position, l'indicateur 7 qui tourne deux fois moins vite que l'aiguille des heures 1 marque la bissectrice entre la position de l'indicateur 16 et le midi ; il pointe donc vers le sud, les trois autres points cardinaux pouvant être retrouvés très facilement à l'aide des autres branches de l'étoile 7. La branche correspondant au nord recherché est marquée spécialement.

Sur la figure 4, l'indicateur 16 d'heure solaire marque huit heures, le sud est à dix heures (correspondant à la bissectrice entre huit et douze heures), et l'indicateur 7 montre le nord à l'opposé de cette bissectrice, c'est-à-dire à quatre heures.

Dans l'hémisphère Sud, après s'être assuré que le déphasage correct a été introduit entre l'heure civile et l'heure solaire sur l'anneau 15, l'utilisateur tourne également la montre afin d'orienter l'indicateur 16 vers le soleil. La position du nord peut immédiatement être lue à l'aide de l'indicateur 8. Dans l'exemple illustré sur la figure 5, il est dix heures, l'heure solaire indique huit heures, et l'indicateur 8 pointe vers le nord à six heures.

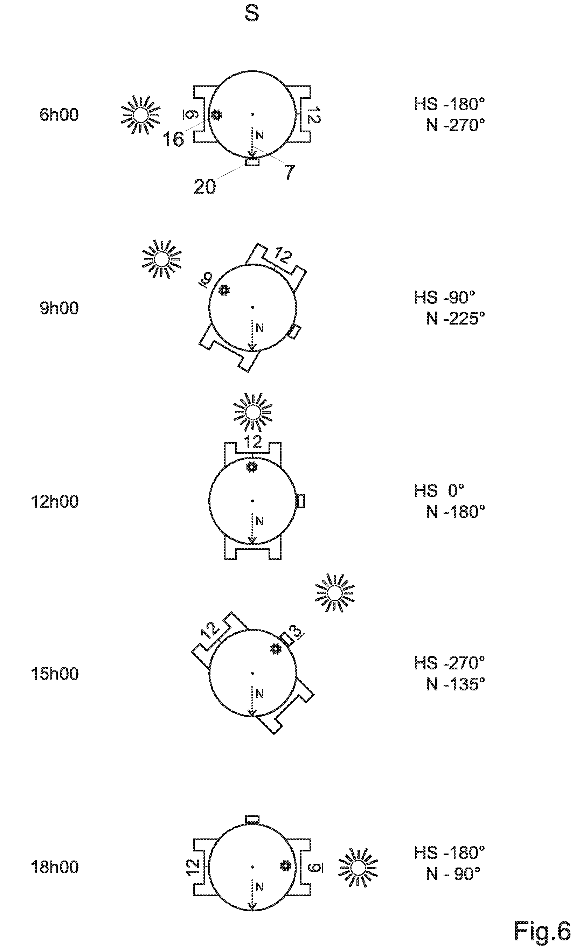

La figure 6 illustre la vitesse de déplacement de l'indicateur d'heure solaire 16 (heure solaire) et de l'aiguille marquée de l'indicateur 7 qui indique le nord au cours d'une journée dans l'hémisphère Nord. Sur toutes les figures, le nord se trouve vers le bas ; l'orientation de la montre au cours des heures est illustrée schématiquement à l'aide des cornes de la boîte et de la couronne 20 à 3 heures

A 6 heures (heure solaire), l'indicateur d'heure solaire 16 est à - 180° par rapport au midi. La direction du nord est indiquée par l'indicateur 7 qui pointe à 3 heures (-270°).

3 heures plus tard, à 9 heures, l'indicateur d'heure solaire a parcouru un quart du cadran et se trouve donc à -90° par rapport à la direction du midi de la montre. La direction du nord est à 4 :30 (-225°).

A midi, l'indicateur 16 de l'heure solaire pointe vers le sud à 12 :00 (0°) et l'aiguille marquée de l'indicateur 7 indiquant le nord pointe sur 6:00 (-180°).

A 15 heures, l'indicateur d'heure solaire 16 a déjà parcouru 270° tandis que le soleil n'a parcouru que 135° dans le ciel ; le nord est à 7 :30 (-135°).

Enfin, à 18 :00, l'indicateur d'heure solaire a parcouru 360°, soit deux fois plus que l'indicateur 7 qui montre le nord à 9 :00 (-90°), soit une rotation de 180° seulement.

On voit donc à l'aide de ces exemples que dans l'hémisphère Nord l'indicateur d'heure solaire 16 se déplace deux fois plus vite sur le cadran que l'indicateur de direction 7. Le rapport d'engrenage de la chaîne cinématique 40-44 entre l'anneau solaire 15 et l'indicateur 7 doit donc être de 0.5. Ce rapport correspond aussi à la relation entre la vitesse angulaire du soleil (un tour en 24 heures) et la vitesse angulaire de l'indicateur d'heures (un tour en douze heures).

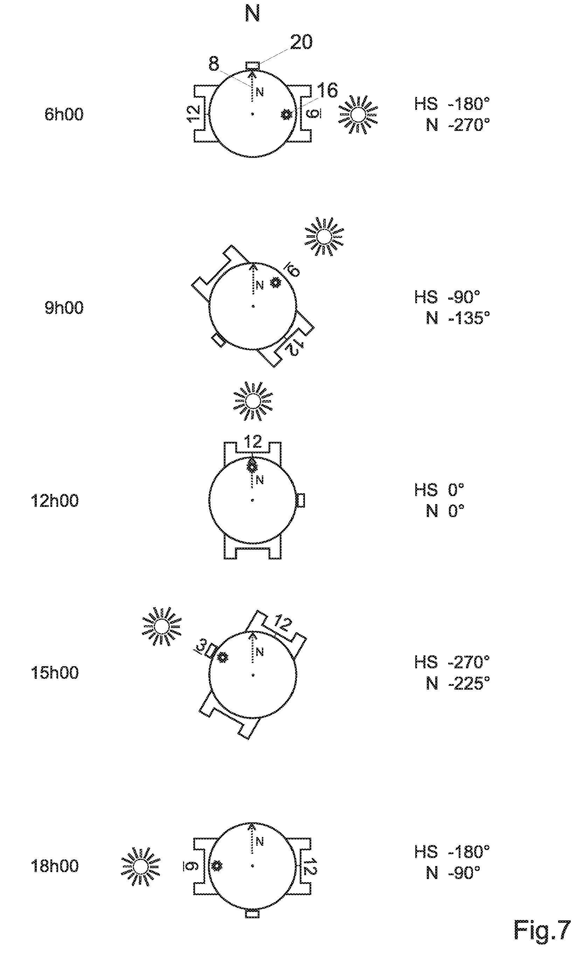

La situation dans l'hémisphère Sud est illustrée à l'aide de la figure 7. Le nord est en haut de la page. A 6 heures, l'indicateur d'heure solaire 16 est à -180° par rapport au midi. La direction du nord est indiquée par l'indicateur 8 qui pointe à 3 heures (-270°).

3 heures plus tard, à 9 heures, l'indicateur d'heure solaire 16 a parcouru 90° sur le cadran et se trouve donc à -90°. La direction du nord est à 7 :30 (-135°)

A midi, les deux indicateurs 16 et 8 pointent tous les deux vers le nord à 12 heures (0°). A 15 heures, l'indicateur d'heure solaire a parcouru 270° tandis que le soleil a déjà parcouru 135° dans le ciel ; l'indicateur 8 est donc à 3 :30 (135°).

Enfin, à 18 :00, l'indicateur d'heure solaire a parcouru 180°, soit moins que l'indicateur 8 qui pointe vers le nord à 9 :00 (270°).

On voit donc à l'aide de ces exemples que dans l'hémisphère Sud l'indicateur 8 doit donc se déplacer 1,5 fois plus vite que l'aiguille des heures et que l'indicateur d'heure solaire 16. Le rapport du train d'engrenage 50 à 54 doit donc être de 1,5 fois.

Dans l'exemple illustré, deux indicateurs distincts 7,8 sont employés pour indiquer la direction des points cardinaux dans chacun des deux hémisphères. Dans une variante, il serait possible de réaliser une montre avec un seul indicateur qui, selon un mode sélectionné par l'indicateur, indique la direction des points cardinaux dans l'un ou l'autre hémisphère. L'orientation de cet indicateur devrait donc être modifiée à chaque changement de mode, c'est-à-dire lorsque l'utilisateur passe l'équateur pour aller d'un hémisphère à l'autre.

Le mouvement de l'invention peut être un mouvement complet comprenant une source d'énergie mécanique ou électrique, un organe de réglage et des moyens pour entraîner les aiguilles et les indicateurs de direction 7, 8. Dans une autre variante, le mouvement est un mouvement auxiliaire destiné à coopérer avec un mouvement de base ; dans ce cas, le mouvement de base entraîne les aiguilles aux heures, y compris la roue des heures, tandis que le mouvement auxiliaire est entraîné par le mouvement de base pour déplacer les indicateurs de direction 7, 8 et l'indicateur d'heure solaire 16. Les boutons-poussoirs 18, 19 sont de préférence liés au mouvement auxiliaire.

### Numéros de référence employés sur les figures

- 1: Aiguille des heures
- 3: Aiguille des minutes
- 5: Aiguille des secondes
- 6: Canon des aiguilles centrales
- 7: Aiguille de boussole - hémisphère nord
- 8: Aiguille de boussole - hémisphère sud
- 10: Axe aiguille jour/nuit
- 15: Anneau d'heure solaire
- 16: Indication d'heure solaire
- 17: Denture interne sur l'anneau d'heure solaire
- 18: Premier bouton-poussoir pour corriger le décalage de l'heure solaire
- 19: Second bouton-poussoir pour corriger le décalage de l'heure solaire
- 20: Couronne de remontoir
- 21: Disque de quantième
- 22: Affichage de quantième
- 27: Axe de l'aiguille de boussole - hémisphère Nord
- 28: Axe de l'aiguille de boussole - hémisphère Sud
- 30: Roue des heures
- 31-33: Liaison cinématique entre la roue des heures et l'anneau solaire
- 34: Guichet pour l'affichage d'une indication jour-nuit
- 40-44: Liaison cinématique entre l'anneau solaire et l'aiguille de boussole 7
- 50-54: Liaison cinématique entre le disque solaire et l'aiguille de boussole 8
- 60-64: Liaison cinématique entre le disque solaire et l'aiguille jour/nuit

## Revendications

1. Mouvement horloger de montre **caractérisé par**
- un premier moyen d'entraînement (28) pour entraîner un premier indicateur (8) de façon à ce que le premier indicateur (8) indique la direction d'un des points cardinaux lorsque ladite montre se trouve dans l'hémisphère Sud et une aiguille des heures (1) de la montre indiquant l'heure civile ou un indicateur d'heure solaire (16) de la montre tournant à la même vitesse que l'aiguille des heures (1) est pointé vers le soleil, et
- un deuxième moyen d'entraînement (27) pour entrainer un deuxième indicateur (7) distinct du premier indicateur (8) de façon à ce que le deuxième indicateur (7) indique la direction dudit un des points cardinaux lorsque la montre se trouve dans l'hémisphère Nord et l'aiguille des heures (1) ou l'indicateur d'heure solaire (16) de la montre est pointé vers le soleil.

2. Le mouvement horloger de la revendication 1, dans lequel ledit premier moyen d'entraînement (28) est arrangé pour effectuer trois rotations de 360° en 24 heures.

3. Le mouvement horloger de l'une des revendications 1 à 2, dans lequel la vitesse de rotation dudit premier moyen d'entraînement (28) est différente de la vitesse dudit deuxième moyen d'entraînement (27).

4. Le mouvement horloger de la revendication 3, dans lequel le premier moyen d'entraînement (28) effectue trois tours en 24 heures, tandis que le deuxième moyen d'entraînement (27) effectue un tour en 24 heures.

5. Le mouvement horloger de l'une des revendications 1 à 4, comportant un élément (18, 19) pour corriger le décalage entre le temps solaire et le temps civil affiché par la montre.

6. Le mouvement horloger de la revendication 5, comportant au moins un organe (20) pour introduire des décalages en continu ou par pas correspondants à des incréments de durée inférieure à une heure.

7. Le mouvement horloger de l'une des revendications 1 à 6, comprenant une roue des heures (30), dans lequel ledit premier moyen d'entraînement (28) et ledit deuxième moyen d'entraînement (27) sont entraînés par la roue des heures (30).

8. Le mouvement horloger de la revendication 7, comprenant un anneau externe (15) muni d'une denture intérieure (17),
ledit anneau externe (15) étant mis en rotation au travers de ladite roue des heures (30),
ledit anneau externe (15) entraînant lesdites premier et deuxième moyens d'entraînement (28, 27).

9. Le mouvement horloger de l'une des revendications 7 ou 8, dans lequel la liaison cinématique entre ladite roue des heures (30) et lesdites moyens d'entraînement (27, 28) peut être débrayée de manière à corriger le décalage entre le temps solaire et le temps civil affiché par la montre.

10. Le mouvement horloger de l'une des revendications 8 ou 9, comportant un disque ou anneau externe (15) entraînant un indicateur (16) sur la face supérieure de la montre destiné à être aligné avec le soleil lors de la détermination du point cardinal.

11. Le mouvement horloger de l'une des revendications 8 à 10, l'anneau externe (15) entraînant un indicateur (10) permettant de distinguer entre la nuit et le jour ou entre le matin et l'après-midi.

12. Le mouvement horloger de l'une des revendications 1 à 11, constituant un mouvement auxiliaire destiné à être entraîné par un mouvement de base pour actionner le ou lesdits indicateurs (7, 8).

13. Le mouvement horloger de l'une des revendications 1 à 12, associé à une boîte de montre.

14. Le mouvement horloger de la revendication 13, collaborant avec au moins un bouton-poussoir (18, 19) pour introduire des décalages entre le temps solaire et le temps civil affiché par la montre par pas correspondant à des heures entières.

15. Montre comprenant
- le mouvement horloger selon l'une des revendications 1 à 14
- une aiguille des heures (1) indiquant l'heure civile ou un indicateur d'heure solaire (16) tournant à la même vitesse que l'aiguille des heures (1),
- un premier indicateur (8) entraîné par le mouvement à l'aide d'un premier moyen (28) de façon à indiquer la direction d'un des points cardinaux lorsque ladite montre se trouve dans l'hémisphère Sud et l'aiguille des heures (1) ou l'indicateur d'heure solaire (16) de la montre est pointé vers le soleil, et
- un deuxième indicateur (7) entraîné par le mouvement à l'aide d'un deuxième moyen (27) de façon à indiquer la direction dudit un des points cardinaux lorsque la montre se trouve dans l'hémisphère Nord et l'aiguille des heures (1) ou l' indicateur d'heure solaire (16) de la montre est pointé vers le soleil.

16. La montre de la revendication précédente, dans lequel ledit deuxième indicateur (7) est constitué par une deuxième aiguille pointant vers un point cardinal lorsque la montre se trouve dans l'hémisphère Nord,
et dans lequel ledit premier indicateur (8) est constitué par une première aiguille pointant vers ledit point cardinal lorsque la montre se trouve dans l'hémisphère Sud.

17. La montre de l'une des revendications 15 ou 16, comportant un indicateur (16) distinct de l'aiguille des heures (1) et qui permet d'indiquer l'heure solaire.

## Patentansprüche

1. Uhrwerk einer Uhr, **gekennzeichnet durch**
- ein erstes Antriebsmittel (28) zum Antreiben eines ersten Zeigers (8), so dass der erste Zeiger (8) die Richtung einer der Himmelsrichtungen anzeigt, wenn die besagte Uhr sich in der Südhemisphäre befindet, und so dass ein die Standardzeit angebender Stundenzeiger (1) der Uhr oder ein mit der gleichen Geschwindigkeit wie der Stundenzeiger (1) drehender Sonnenzeitzeiger (16) der Uhr in Richtung der Sonne ausgerichtet ist, und
- ein zweites Antriebsmittel (27) zum Antreiben eines zweiten, vom ersten Zeiger (8) verschiedenen Zeigers (7), so dass der zweite Zeiger (7) die Richtung der besagten einen der Himmelsrichtungen anzeigt, wenn die besagte Uhr sich in der Nordhemisphäre befindet, und der Stundenzeiger (1) oder der Sonnenzeitzeiger (16) der Uhr in Richtung der Sonne ausgerichtet ist.

2. Das Uhrwerk vom Anspruch 1, worin das besagte erste Antriebsmittel (28) angeordnet ist, um drei Drehungen von 360° in 24 Stunden durchzuführen.

3. Das Uhrwerk eines der Ansprüche1 bis 2, worin die Rotationsgeschwindigkeit des besagten ersten Antriebsmittels (28) verschieden von der Geschwindigkeit des besagten zweiten Antriebsmittels (27) ist.

4. Das Uhrwerk vom Anspruch 3, worin das erste Antriebsmittel (28) drei Drehungen in 24 Stunden durchführt, während das zweite Antriebsmittel (27) eine Drehung in 24 Stunden durchführt.

5. Das Uhrwerk eines der Ansprüche1 bis 4, mit einem Element (18, 19) zum Korrigieren der Verschiebung zwischen der Sonnenzeit und der von der Uhr angezeigten Standardzeit.

6. Das Uhrwerk vom Anspruch 5, mit mindestens einem Organ (20), um Verschiebungen einzuführen, kontinuierlich oder in Schritten, welche Inkrementen von einer Dauer von weniger als eine Stunde entsprechen.

7. Das Uhrwerk eines der Ansprüche1 bis 6, mit einem Stundenrad (30), worin das besagte erste Antriebsmittel (28) und das besagte zweite Antriebsmittel (27) durch das Stundenrad (30) angetrieben werden.

8. Das Uhrwerk vom Anspruch 7, mit einem Aussenring (15), welcher mit einer inneren Verzahnung (17) versehen ist,
worin der besagte Aussenring (15) durch das besagte Stundenrad (30) in Rotation versetzt wird,
worin der besagte Aussenring (15) das besagte erste und zweite Antriebsmittel (28, 27) antreibt.

9. Das Uhrwerk eines der Ansprüche7 oder 8, worin die kinematische Verbindung zwischen dem besagten Stundenrad (30) und den besagten Antriebsmitteln (27, 28) ausgekuppelt werden kann, um die Verschiebung zwischen der Sonnenzeit und der von der Uhr angezeigten Standardzeit zu korrigieren.

10. Das Uhrwerk eines der Ansprüche 8 oder 9, mit einer Aussenscheibe oder einem Aussenring (15) zum Antreiben eines Zeigers (16) auf der Oberseite der Uhr, welcher dazu bestimmt ist, bei der Bestimmung der Himmelsrichtung mit der Sonne ausgerichtet zu werden.

11. Das Uhrwerk eines der Ansprüche 8 bis 10, worin der Aussenring (15) einen Zeiger (10) antreibt, um eine Unterscheidung zwischen Nacht und Tag oder zwischen Morgen und Nachmittag zu ermöglichen.

12. Das Uhrwerk eines der Ansprüche1 bis 11, welches ein Hilfsuhrwerk bildet, dazu bestimmt, durch ein Basisuhrwerk angetrieben zu werden, um den oder die besagten Zeiger (7, 8) zu betätigen.

13. Das Uhrwerk eines der Ansprüche 1 bis 12, in Verbindung mit einem Uhrengehäuse.

14. Das Uhrwerk des Anspruchs 13, wobei es mit mindestens einem Druckknopf (18, 19) zusammenarbeitet, um Verschiebungen zwischen der Sonnenzeit und der von der Uhr angezeigten Standardzeit einzuführen, in Schritten, welche vollen Stunden entsprechen.

15. Uhr, mit:
- dem Uhrwerk gemäss einem der Ansprüche 1 bis 14
- einem Stundenzeiger (1), welcher die Standardzeit angibt, oder einem mit der gleichen Geschwindigkeit wie der Stundenzeiger (1) drehenden Sonnenzeitzeiger (16),
- einem ersten Zeiger (8), welcher vom Uhrwerk mittels eines ersten Mittels (28) angetrieben wird, um die Richtung einer der Himmelsrichtungen anzuzeigen, wenn die besagte Uhr sich in der Südhemisphäre befindet, und der Stundenzeiger (1) oder der Sonnenzeitzeiger (16) in Richtung der Sonne ausgerichtet ist, und
einem zweiten Zeiger (7), welcher vom Uhrwerk mittels eines zweiten Mittels (27) angetrieben wird, um die Richtung der besagten einen Himmelsrichtung anzuzeigen, wenn die besagte Uhr sich in der Nordhemisphäre befindet, und der Stundenzeiger (1) oder der Sonnenzeitzeiger (16) in Richtung der Sonne ausgerichtet ist.

16. Die Uhr des vorhergehenden Anspruchs, worin der besagte zweite Zeiger (7) aus einem zweiten Zeiger besteht, der in Richtung einer Himmelsrichtung zeigt, wenn die Uhr sich in der Nordhemisphäre befindet,
und worin der besagte erste Zeiger (8) aus einem ersten Zeiger besteht, der in Richtung der besagten Himmelsrichtung zeigt, wenn die Uhr sich in der Südhemisphäre befindet.

17. Die Uhr eines der Ansprüche 15 oder 16, mit einem vom Stundenzeiger (1) verschiedenen Zeiger (16) und der die Sonnenzeit anzuzeigen vermag.

## Claims

1. Clockwork movement of a watch, **characterized by**
- a first driving means (28) for driving a first indicator (8) so that the first indicator (8) indicates the direction of one of the cardinal points when said watch is in the southern hemisphere and an hour hand (1) of the watch indicates the civil time or a solar time indicator (16) of the watch turning at the same speed as the hour hand (1) points towards the sun, and
- a second driving means (27) for driving a second indicator (7) distinct from the first indicator (8) so that the second indicator (7) indicates the direction of said one cardinal point when the watch is in the northern hemisphere and the hour hand (1) or the solar time indicator (16) of the watch points towards the sun.

2. The clockwork movement of claim 1, wherein said first driving means (28) is arranged for performing three rotations of 360° in 24 hours.

3. The clockwork movement of one of the claims 1 to 2, wherein the speed of rotation of said first driving means (28) is different from the speed of said second driving means (27).

4. The clockwork movement of claim 3, wherein the first driving means (28) performs three rotations in 24 hours, whilst the second driving means (27) performs one turn in 24 hours.

5. The clockwork movement of one of the claims 1 to 4, comprising an element (18, 19) for correcting the shift between the solar time and the civil time displayed by the watch.

6. The clockwork movement of claim 5, comprising at least one member (20) for introducing shifts continuously or in steps corresponding to increments of a duration of less than one hour.

7. The clockwork movement of one of the claims 1 to 6, comprising an hour wheel (30), wherein said first driving means (28) and said second driving means (27) are driven by the hour wheel (30).

8. The clockwork movement of claim 7, comprising an outer ring (15) provided with an inner toothing (17),
wherein said outer ring (15) is put in rotation through said hour wheel (30),
wherein said outer ring (15) drives said first and second driving means (28, 27).

9. The clockwork movement of one of the claims 7 or 8, wherein the kinematic link between said hour wheel (30) and said driving means (27, 28) can be disengaged so as to correct the shift between the solar time and the civil time displayed by the watch.

10. The clockwork movement of one of the claims 8 or 9, comprising an outer disk or ring (15) driving an indicator (16) on the upper face of the watch designed to be aligned with the sun when determining the cardinal point.

11. The clockwork movement of one of the claims 8 to 10,
wherein the outer ring (15) drives an indicator (10) making it possible to distinguish between night and day or between morning and afternoon.

12. The clockwork movement of one of the claims 1 to 11, constituting an auxiliary movement designed to be driven by a base movement to actuate the said indicator or indicators (7, 8).

13. The clockwork movement of one of the claims 1 to 12, associated with a watch case.

14. The clockwork movement of claim 13, working with at least one push-button (18, 19) for introducing shifts between the solar time and the civil time displayed by the watch in steps corresponding to full hours.

15. Watch comprising
- the clockwork movement according to one of the claims 1 to 14
- an hour hand (1) indicating the civil time or an indicator of solar time (16) turning at the same speed as the hour hand (1),
- a first indicator (8) driven by the movement using a first means (28) so as to indicate the direction of one of the cardinal points when said watch is in the southern hemisphere and the hour hand (1) or the solar time indicator (16) of the watch points towards the sun, and
- a second indicator (7) driven by the movement using a second means (27) so as to indicate the direction of said one cardinal point when the watch is in the northern hemisphere and the hour hand (1) or the solar time indicator (16) of the watch points towards the sun.

16. The watch of the preceding claim, wherein said second indicator (7) is constituted by a second hand pointing towards a cardinal point when the watch is in the northern hemisphere,
and wherein said first indicator (8) is constituted by a first hand pointing towards said cardinal point when the watch is in the southern hemisphere.

17. The watch of one of the claims 15 or 16, comprising an indicator (16) distinct from the hour hand (1) and that enables the solar time to be indicated.
